# EUROPEAN PATENT APPLICATION

(11) **EP 3 309 586 A1**
(43) Date of publication of application: **18.04.2018**
(21) Application number: 16193330.4
(22) Date of filing: 11.10.2016
(51) Int. Cl.: G01S 19/21, G01S 19/48, G01S 19/10, G01S 19/01, G01S 19/18, G01S 1/02, G01S 5/14

(54) **NAVIGATION RECEIVER, NAVIGATION SYSTEM JAMMER, METHOD FOR DETERMINING A POSITION, METHOD FOR JAMMING UNAUTHORIZED RECEIVERS AND METHOD FOR RESTRICTING USAGE OF A NAVIGATION SYSTEM**

(71) Applicant: Fraunhofer-Gesellschaft zur Förderung der angewandten Forschung e.V., 80686 München (DE)
(72) Inventor: Rügamer, Alexander, 90480 Nürnberg (DE); Van Der Merwe, Johannes Rossouw, 90489 Nürnberg (DE)
(74) Representative: Burger, Markus

(57) **Abstract**

A navigation receiver for determining a position, wherein the navigation receiver is configured to determine a position on the basis of a global navigation satellite system signal, wherein the navigation receiver is configured to recognize a presence of one or more jamming signals overlaying the global navigation satellite system signal or lying within a frequency band used for an evaluation of the global navigation satellite system signal; and wherein the navigation receiver is configured to determine the position on the basis of the one or more jamming signals if the presence of one or more jamming signals overlaying the global navigation satellite system signal or lying within a frequency band used for an evaluation of the global navigation satellite system signal is recognized.

## Description

### Technical Field

The present invention relates to position determination during jamming of a global navigation satellite system.

### Background of the invention

Global Navigation Satellite Systems (GNSS) provide a global and always available service of Position, Velocity and Time (PVT) information. However, for crisis situation or to protect certain geographical areas, GNSS service might be required to be spatially or temporarily made unavailable for non-authorized users while authorized users shall still be able to obtain valid PVT information.

Possible situations or localities in need for such a protection are e.g. the shielding of mass events, outdoor meetings of exposed persons, critical infrastructure, military areas, etc. The endangerments could be GNSS guided weapons, GNSS guided unmanned aircraft systems (UAV), as well as enemy vehicles or agents.

Due to the inherently low power of GNSS signals (approx. -130 dBm received signal power on earth), the GNSS bands are dominated by white Gaussian noise. The noise is about a hundred to a few thousand times stronger than the GNSS signals. It has been found that an intentional interference source within the GNSS bands (so called "jammers") can be used to make GNSS spatially and temporarily unavailable. Such a jammer attack can be categorized as a denial of service (DoS) - the GNSS service is, in principle, still available but its broadcast signals are completely exceeded by the jamming signal.

It has been found that privacy protection devices (PPD)-which are commercially available over the internet even if their usage is prohibited-or military GNSS jammers cannot discriminate authorized from non-authorized receivers; all GNSS receivers are equally affected, leading to the complete unavailability of GNSS.

In US2015264239A, a GNSS jammer detection system with optical tracking and identification is disclosed.

In US2006234641A, a system for using an existing cellular network to detect incidents of GPS jamming is disclosed.

In US7142159B, a pseudolite navigation system is disclosed.

In WO11054763A1, a method and system for jamming GNSS signals is disclosed.

In RU2539563C, a system for radio suppression of hostile GNSS navigation user equipment, compatible with local GNSS navigation user equipment is disclosed.

In KR101551395B, a system for providing positioning and time information on the sea using maritime wireless communications.

In RU2563972C, a spatially distributed jamming system is disclosed.

Therefore, it exists a desire a for a concept which allows that a position determination is possible for authorized receivers during jamming of a GNSS signal.

### Summary of the invention

An embodiment of the invention creates a navigation receiver for determining a position. The navigation receiver is configured to determine a position, e.g. its position, on the basis of a global navigation satellite system signal in the absence of a jamming signal. Furthermore, the navigation receiver is configured to recognize or detect a presence of one or more jamming signals overlaying the global navigation satellite system signal or lying within a frequency band used for an evaluation of the global navigation satellite system signal, for example such that the GNSS signal is not usable for a determination of a position, for example because a receiver front end or analog-to-digital converter is overload-ed/overdriven by the jamming signal. Moreover, the navigation receiver is configured to selectively determine the position, e.g. its position, on the basis of the one or more jamming signals if the presence of one or more jamming signals overlaying the global navigation satellite system signal or lying within a frequency band used for an evaluation of the global navigation satellite system signal is recognized (or detected).

The described navigation receiver is advantageous in that it flexibly enables position determination based on GNSS signal or one or more jamming signals. Using the GNSS signal enables position determination when no jamming signal is present, for example with a conventional GNSS receiver concept (which may, for example, be improved by an improved input stage capable to handle strong signals). Additionally, when a jamming signal is detected, the receiver switches its position determination to be based on the jamming signal, as during jamming signal activity a GNSS signal may not be usable anymore for position determination. This may be due to the fact that a GNSS signal to jammer signal ratio is too low for reception of the GNSS signal. Therefore, using one or more jamming signals for position determination enables a robust system during jammer activity and GNSS signal unavailability. The one or more jammer signal can for example be received with a higher dynamic range as the GNSS signal to avoid overloading/overdriving of the receiver front end or analog-to-digital converter. For example, an authorized navigation receiver as discussed here may have improved capabilities and/or knowledge to be able to determine its position on the basis of the jammer signals, while other, non-authorized navigation receivers will not be able to determine a position on the basis of the jamming signal and will just be disturbed in their position determination by the jamming signal (a power of which is typically much larger than a power of a GNSS signal "normally" used by the navigation receivers)

According to embodiments, the navigation receiver is configured to use an a-priori knowledge about positions of one or more transmitters transmitting one or more jamming signals to determine the position on the basis of the one or more jamming signals. Using a-priori knowledge about the positions of transmitters facilitates easier position determination of the receiver based on the jamming signals, as for example the receiver's position can be derived from the a-priori known positions. In contrast, unauthorized navigation receivers typically do not have the a-priori knowledge and therefore cannot exploit the jamming signals for position determination.

According to embodiments, the navigation receiver is configured to obtain an identification information on the basis of a jamming signal, and to obtain an information about a transmitter transmitting the jamming signal, e.g. information about a position of the transmitter, on the basis of the identification information, e.g. using a knowledge about an association between identification information and transmitter position. Obtaining the identification information enables easy assignment of jamming signals to transmitters. Moreover, being able to associate identification information with the transmitter position provides valuable information for deriving the navigation receiver's position.

According to embodiments, the navigation receiver is configured to evaluate a jamming signal, to extract from the jamming signal a position information describing a position of a transmitter transmitting the jamming signal. Obtaining position information of transmitters transmitting the one or more jamming signals is especially useful, if for example no prior knowledge about the transmitter positions is available, or if for example the transmitter position or location has changed since the last position from which information was available. Thus, mobile transmitters can be used for transmitting the jamming signal.

According to embodiments, the navigation receiver is configured to distinguish a plurality of jamming signals overlaying the global navigation satellite system signal or lying within a frequency band used for an evaluation of the global navigation satellite system signal, and to determine the position on the basis of the jamming signals if the presence of the jamming signals overlaying the global navigation satellite system signal or lying within a frequency band used for an evaluation of the global navigation satellite system signal is recognized. The ability to distinguish individual jamming signals is for example helpful for suppressing individual jamming signals in order to evaluate other jamming signals, or for associating jamming signals to individual transmitters and corresponding position information. By being able to distinguish a plurality of jamming signals, a position can be determined by the navigation receiver only relying on jamming signals, i.e. without using the GNSS information which is jammed

According to embodiments, the navigation receiver is configured to evaluate a jamming signal, to extract from the jamming signal a time information and/or a clock correction information. Obtaining a time information can be beneficial for position determination as signal propagation times can be derived therefrom and consequently position information of the receiver. Moreover, having a clock in the receiver synchronous to the transmitter due to an obtained clock correction enables easy reception of for example digitally modulated signals, and helps to determine the position with good accuracy.

According to embodiments, the one or more jamming signals and the global navigation satellite signal overlap in frequency or cover identical frequency ranges. Having jamming signals with identical or overlapping frequency ranges as the GNSS signal enables usage of a single antenna system and/or of similar receive operation (or receiver structure) as performed for GNSS signals, i.e. no complex receiver architecture may be needed for evaluation of the jamming signals.

According to embodiments, the navigation receiver is configured to use jamming signals having different types of waveforms or different types of spectral characteristics, e.g. one or more noise-like signals, chirp signals and/or pulsed signals, in order to determine the position on the basis of the one or more jamming signals. Having the ability of using jamming signals with different types of waveforms enables a flexible position determination based on the jamming signal, such that the jamming signals can also be adapted to best fir the situation. Furthermore, using a noise like signal information can be included in the waveform by usage of for example code division multiple access (CDMA), using chirp like waveforms enables retrieval of information from the frequency or the phase of the jamming signal or using pulsed waveforms facilitates retrieval of information from a pulse width or an amplitude of the pulse or a time of arrival of the pulse.

According to embodiments, the navigation receiver is configured to use jamming signals having a global navigation satellite system signal like structure in order to determine the position on the basis of the one or more jamming signals. A GNSS signal like structure can for example be a CDMA based waveform, as employed in the GPS system. Using a familiar structure enables usage of cheap and known receiver structures, wherein capabilities to handle strong jamming signals and knowledge about the jamming signals may be added.

According to embodiments, the navigation receiver is configured to disable evaluation of global navigation satellite system signals if one or more jamming signals are detected and to evaluate the one or more jamming signals in order to determine the position on the basis of the one or more jamming signals in this case. Disabling evaluation for GNSS signals in presence of a jammer signals is beneficial as unnecessary equipment in the receiver may be powered down, thereby saving energy, e.g. battery power.

An embodiment of the invention creates a navigation system jammer for jamming unauthorized navigation receivers. The navigation system jammer is configured to transmit a jamming signal in a frequency band of a global navigation satellite system, within a bandwidth used to receive GNSS signals, or overlaying a global navigation satellite system signal, for example, such that the GNSS signal is not usable for a determination of a position, for example not usable by non-authorized navigation receivers and also not usable by authorized navigation receivers. Furthermore, the navigation system jammer is configured to provide the transmitted jamming signal such that the transmitted jamming signal is usable for a determination of a position of an authorized navigation receiver by the authorized navigation receiver (but, for example, not usable by non-authorized navigation receivers).

The described transmitter is beneficial as it flexibly allows jamming of non-authorized receivers, for example, employed in hostile war planes, tanks or ships. Moreover, friendly vehicles or personnel may still be able to use the transmitters jamming signal to enable a position determination.

According to embodiments, the jammer is configured to time-synchronize the jamming signal to be transmitted to jamming signals transmitted by other navigation system jammers, such that there is a well-defined timing relationship between jamming signals of different navigation system jammers, which enables a position determination on the basis of jamming signals from different jammers (for example, by authorized navigation receivers).

According to embodiments, the navigation system jammer is configured to be controlled by a control unit, wherein the control unit time synchronizes the jammer to other jammers or controls the controlled jammers' emission power and/or jammers' waveform. A control unit may control multiple navigation system jammers to enhance their effect, i.e. cover for example a specific area for example a battlefield or restrict the jamming to a certain legislative area.

According to embodiments, the navigation system jammer is configured to include an identification information into the jamming signal to enable a navigation receiver to distinguish jamming signals from different navigation system jammers. Allowing distinguishability of the jamming signals helps in facilitating position determination for authorized receivers. For example, identification information can be associated to position information of the individual jammers by the authorized navigation receivers.

According to embodiments, the navigation system jammer is mobile, e.g. ground based, airborne or ship-based. Alternatively or in addition the navigation system jammer may be configured to include into the jamming signal a position information describing a position from which the jamming signal is transmitted. Including information describing the navigation system jammer's position enables easier position determination for authorized receivers based on the transmitted position information. For example, the position information may be included or encrypted such that it is only accessible to authorized navigation receivers.

According to embodiments, the navigation system jammer is configured to include into the jamming signal a time information and/or a clock correction information. Time information may simplify position determination of an authorized receiver, moreover clock correction information and/or time information may be helpful in receiving digitally modulated signals for an authorized receiver and achieving good position information.

According to embodiments, the navigation system jammer is configured to switch between jamming signals having different types of waveforms or different types of spectral characteristics, e.g. noise-like signal, chirp signal, pulsed signal. Using different kind of waveforms may be helpful in evading distortion due to for example background noise or other jamming signals.

According to embodiments, the navigation system jammer is configured to adapt a jamming signal waveform in dependence on distortion signals present in an environment of the navigation system jammer to reduce or limit an impact of the distortion signals on a usability of the jamming signal for a determination of a position by authorized navigation receivers.

An embodiment creates a restricted communication system comprising one or more navigation system jammers and an authorized navigation receiver. Furthermore, the one or more navigation system jammers are configured to transmit one or more jamming signals, wherein the one or more jamming signals are configured to hamper an unauthorized navigation receiver from determining its position using one or more global navigation satellite system signals, while enabling the authorized receiver to determine its position. Moreover, the authorized navigation receiver is configured to determine its position based on one or more global navigation satellite system signals if no jamming signal is detected and to determine its position based on the one or more jamming signals if a jamming signal is detected. The described system offers a flexible way of restricting access to signals providing position information to authorized users. Thereby, non-authorized, for example hostile users, can be put to a disadvantage.

An embodiment of the invention provides for a method for determining a position using a navigation receiver. The method comprises determining whether one or more jamming signals overlaying a global navigation satellite system signal or lying within a frequency band used for an evaluation of the global navigation satellite system signal are present. Furthermore, the method comprises determining a position of the navigation receiver on the basis of a global navigation satellite system signal if it is found that there is no jamming signal overlaying a global navigation satellite system signal or lying within a frequency band used for an evaluation of the global navigation satellite system signal present. Moreover, the method comprises determining the position of the navigation receiver on the basis of the one or more jamming signals if the presence of one or more jamming signals overlaying the global navigation satellite system signal or lying within a frequency band used for an evaluation of the global navigation satellite system signal is recognized. The described method is especially useful in determining a position information during jamming signal activity. Especially, usage of the jamming signal for position determination enables robust position determination, even in the case of unavailability of a GNSS signal.

An embodiment of the invention provides for a method for jamming one or more unauthorized navigation receivers. The method comprises transmitting a jamming signal in a frequency band of a global navigation satellite system, within a bandwidth used to receive GNSS signals, or overlaying a global navigation satellite system signal, in order to jam the one or more unauthorized navigation receivers, such that the GNSS signal is not usable for a determination of a position, for example not usable by non-authorized navigation receivers and by authorized navigation receivers. Furthermore, the transmitted jamming signal is provided such that the transmitted jamming signal is usable or used for a determination of a position of an authorized navigation receiver by the authorized navigation receiver but not usable by non-authorized navigation receivers. Transmitting a jamming signal as described in the method enables discrimination of authorized and non-authorized users or receivers. Thereby, security is provided for authorized users as they can for example make decisions based on available position information obtained from the one or more jamming signals.

An embodiment of the invention provides for a method for restricting usage of a navigation system to authorized receivers. the method comprises transmitting one or more jamming signals in a frequency band of a global navigation satellite system or overlaying a global navigation satellite system signal. Furthermore, the one or more jamming signals prevents an unauthorized receiver from determining a position on the basis of the global navigation satellite system signal. Moreover, the one or more jamming signal enables an authorized navigation receiver, which receives the one or more jamming signals, to determine its position on the basis of the one or more jamming signals, such that the authorized receiver obtains a position information on the basis of the one or more jamming signals. The described method on the one hand enables flexible determination of position information for authorized users while, on the other hand, jamming unauthorized users. The described discrimination of receivers is especially helpful for example in zones of military activity, where hostile, i.e. unauthorized, users should not be able to determine their location and friendly forces corresponding to authorized users should retain full functionality.

Further embodiments of the invention describe a jamming/anti-jamming pseudolite system.

### Brief Description of the Figures

In the following, embodiments of the present invention will be explained with reference to the accompanying drawings, in which:
- Fig. 1: shows a block schematic diagram of a receiver according to an embodiment of the invention;
- Fig. 2: shows a block schematic diagram of a receiver according to an embodiment of the invention;
- Fig. 3: shows a block schematic diagram of a transmitter according to an embodiment of the invention;
- Fig. 4: shows a block schematic diagram of a transmitter according to an embodiment of the invention;
- Fig. 5: shows a schematic of a system according to an embodiment of the invention;
- Fig. 6: shows a flow chart of a method according to an embodiment of the invention;
- Fig. 7: shows a flow chart of a method according to an embodiment of the invention; and
- Fig. 8: shows a flow chart of a method according to an embodiment of the invention.

### Detailed Description of the Embodiments

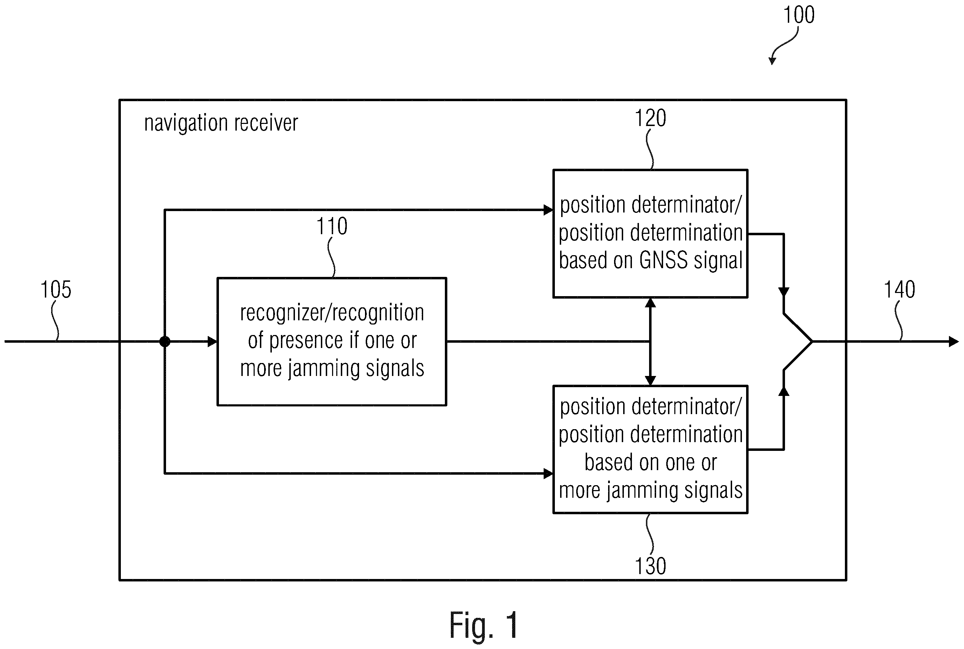

Fig. 1 depicts a block schematic diagram of a navigation receiver 100 which obtains an input signal 105, for example an radio frequency (RF) signal. The input signal 105 is used in the navigation receiver 100 in a recognizer 110 to determine if one or more jamming signals are present in the input signal 105. Based on the recognition performed in block 110 the navigation receiver 100 can determine its position using GNSS signals in position determinator 120 or using jamming signals in the determinator 130.The determinator 120 using GNSS is preferably used in the absence of jamming signals as jamming signals may make GNSS signals unusable for position determination. The determinator 130 is especially useful in the presence of jamming signals as it enables position determination although GNSS signals may not be usable for position determination. A position determination in block 130 may be based on a signal strength observed for a jamming signal or it may be based on some propagation delay or run time information obtained from a jamming signal. Based on the determinators 120 and 130 the navigation receiver 100 provides a position information 140.

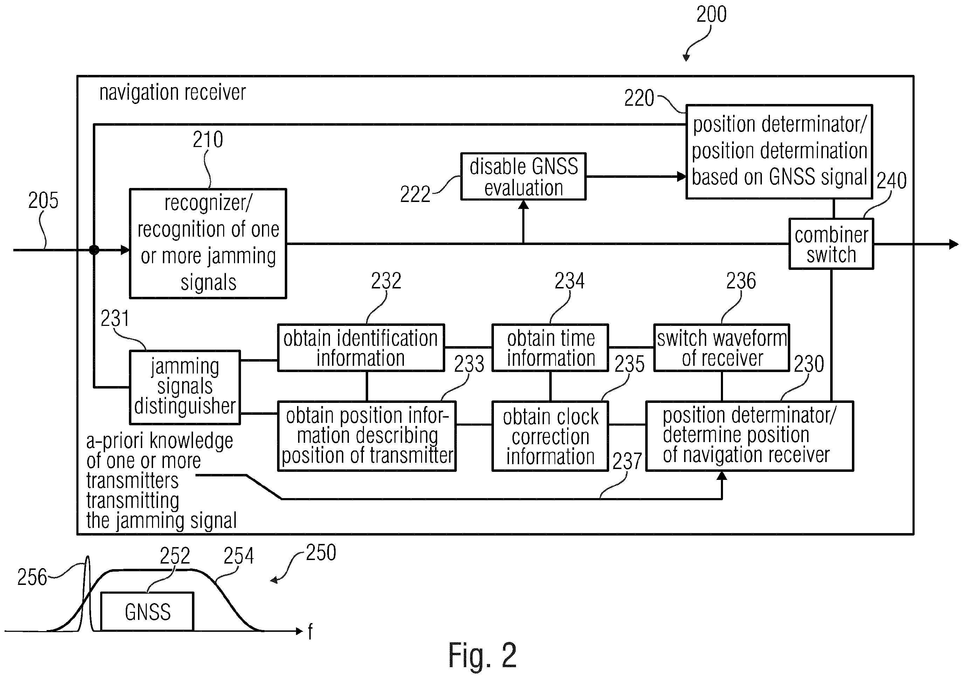

Fig. 2 shows block schematic diagram of a navigation receiver 200, similar to the navigation receiver 100, with additional functionalities which may be incorporated individually or entirely into navigation receiver 100. The navigation receiver takes as an input a signal 205, corresponding to input signal 105 of navigation receiver 100, and performs a recognition of jamming signals in recognizer 210. In the absence of jamming signals the determinator 220 is preferably used for position determination of the navigation receiver 200. Furthermore, the navigation receiver may optionally disable GNSS evaluation based on the recognition 210 of a jamming signal by a decision performed in block 222.

If jamming signals are recognized in the input signal 205 by recognizer 210 the navigation receiver may distinguish individual jamming signals in the distinguisher 231, wherein the individual jamming signals may be transmitted by individual transmitters. Based on the distinguisher 231 individual jamming signals may be extracted and evaluated in position determinator 230 to determine the navigation receiver's 200 position.

Furthermore, optional identification information may be obtained from jamming signals in block 232. For example, identification information included or encoded (for example in an encrypted form) in the jamming signal may be extracted. The identification information may be associated with a navigation system jammer and its position and therefore a position determination in block 230 of the receiver 200 may be simplified when supplemented with identification information.

Moreover, a position information describing the position of a transmitter may optionally be obtained in position information obtainer 233. For example, position information included or encoded (for example in an encrypted form) in the jamming signal may be extracted. Based on an obtained position information a position determination in block 230 may be simplified as for example complex estimation of transmitter position can be avoided. Based on the transmitter position information the receiver's 200 position may be obtained for example by triangulation.

Additionally, in an optional time information obtainer 234, time information may be retrieved from jamming signals. For example, time information included or encoded (for example in an encrypted form) in the jamming signal may be extracted. Time information can be helpful in the position determinator 230 to for example increase accuracy of a position determination in block 230 or facilitate determination of velocity or acceleration information of the receiver.

In an optional clock correction information obtainer 235, information about a clock of a transmitter may be retrieved. Clock information may be especially useful for position determination in block 230 if information is included in a jamming signal, obtained from the input signal 205, through digital transmission. Also, clock information may be used to adjust a clock of the navigation receiver, to clock of one or more transmitters, to thereby allow for a precise position determination (for example by triangulation).

Furthermore, an optional waveform switcher 236 may be incorporated, giving the receiver the functionality to process jamming signals of different types. Switching the waveform may be beneficial as it may allow waveforms which need lower power for transmission or reception or are able to evade other distorting signals.

In the position determinator 230 the position of the receiver is determined based on one or more jamming signals received in input signal 205. The determinator 230 may use optional information provided by any or all of the blocks 231,232, 233, 234, 235 and 236. Moreover, the position determinator 230 may use a-priori knowledge 237 about positions of one or more transmitters to enable or simplify position determination of the receiver based on one or more received jamming signals. In combiner or switch 240 the position information based on GNSS and the jamming signal is combined to obtain a position information, if a combiner is realized in 240. If a switch is realized in block 240, the position determination is obtained solely through determinator 230 in presence of one or more jamming signals or the determination is solely based on determinator 220 if no jamming signal is detected.

An input spectrum is shown in graph 250, wherein a RF signal is typically bandpass-filtered by bandpass 254 to obtain a GNSS signal component 252 such that noise and interferers outside the GNSS band are suppressed to some extent. A jamming signal component 256 is, for example, located at a frequency or frequency range where the bandpass 254 does not have a sufficient attenuation to attenuate the jamming signal and therefore may affect the input signal 205. This is due to the fact that bandpasses in practice do not display infinite attenuation outside of a range of a component of interest, here the GNSS component 252, especially when the frequency range of the jammer component 256 is located next to the GNSS component 252. The frequency range next to the GNSS component 252 is in the so-called transition bandwidth of the bandpass where the bandpass is not able to sufficiently suppress the jammer component 256 which therefore is present with significant amplitude in the input signals 205. Alternatively, the jamming signal may overlay (in frequency) the GNSS. Navigation receivers 100 and 200 as described may use jamming signals to determine their position. On the other hand, the jamming signal(s) lying in the GNSS frequency or overlaying the GNSS signal may prevent a reception or evaluation of the GNSS signal(s), for example by driving an input amplifier of the navigation receiver 200 (not shown) into saturation. Therefore, next suitable jamming devices will be introduced.

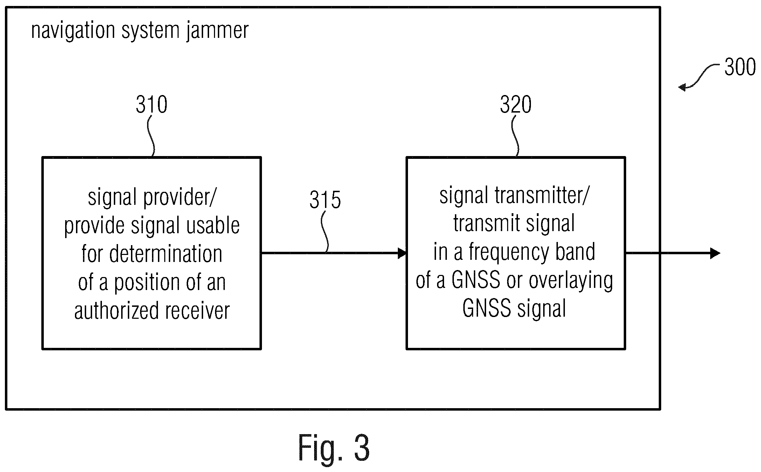

In Fig. 3 a navigation system jammer 300 is depicted. The navigation system jammer comprises a signal provider 310 to provide a signal usable for determination of a position of an authorized receiver. The signal 315 is provided to the signal transmitter 320 which transmits the signal in a frequency band of a GNSS or overlaying a GNSS signal, for example as shown in graph 250. Transmitting the signal such that it occupies the frequency range of a GNSS with sufficient power or by transmitting a signal in a frequency range received for GNSS-based position determination, renders unauthorized receivers useless in that they are unable to determine their position based on GNSS signals. The latter is due to the fact that either their receiving front end is overloaded or overdriven by a high-powered jamming signal transmitted by the navigation system jammer 300 or that GNSS signals may only be received with insufficient signal-to-noise ration due to the jamming signal.

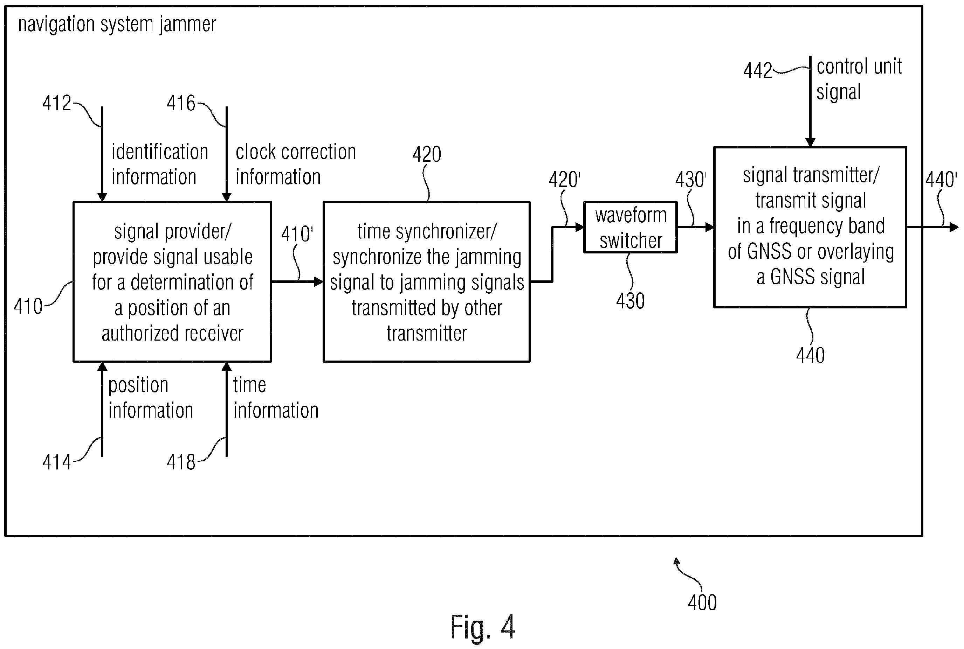

In Fig. 4 a navigation system jammer 400 is depicted which is similar to the navigation system jammer 300 and incorporates further optional functionalities which may analogously be incorporated into navigation system jammer 300. The navigation system jammer 400 comprises a signal provider 410 which provides a signal 410' usable for a determination of a position of an authorized receiver but not usable for unauthorized receivers. The signal provider 410 may use additional information for providing the signal. For example identification information 412 may be included into the signal 410' to enable an authorized receiver to identify a jammer based on the received jamming signal. Furthermore, a position information 414 may be included into the signal 410' describing a position of the navigation system jammer to simplify position determination for an authorized receiver, especially useful, when the navigation system jammer is moving during jamming operation. Moreover, a clock correction information 416 can be included so that an authorized receiver may be able to synchronize its receive operation or its system clock (e.g. for triangulation) to the transmitter which is especially useful when for example considering digitally transmitted information with the jamming signal. Additionally, a time information 418 may be incorporated which is particularly useful for accurate position determination of an authorized receiver or determining its velocity or acceleration.

The signal provider 410 may provide a signal 410' to a time synchronizer 420 such that a jamming signal 420' synchronized to jamming signals of other jammers can be obtained.

Having synchronized jamming signals facilitates simple position determination by an authorized receiver based on the synchronized jamming signals. In a waveform switcher 430 the provided signals 410' and/or 420' may be modulated according to a desired transmission method characterized by its waveform. For example, frequency or phase shift keying might be used (to include additional information) if the transmitted jamming signal should display a chirp like structure, or pulse width and amplitude modulation might be employed if the transmitted signal should display a pulse like structure, or code division multiple access methods may be used for achieving a noise like structure of a jamming signal to be transmitted. The waveform switcher 430 may provide a signal 430' to a signal transmitter 440 which may use one of the signals 410', 420' or 430' to transmit a signal 440'a-d in a frequency band of a GNSS or overlaying a GNSS signal as for example displayed in graph 250. The signal transmitter 440 may use a control unit signal 442 to for example adjust the power with which the signal is transmitted such that a desired area may be covered with the jammer signal.

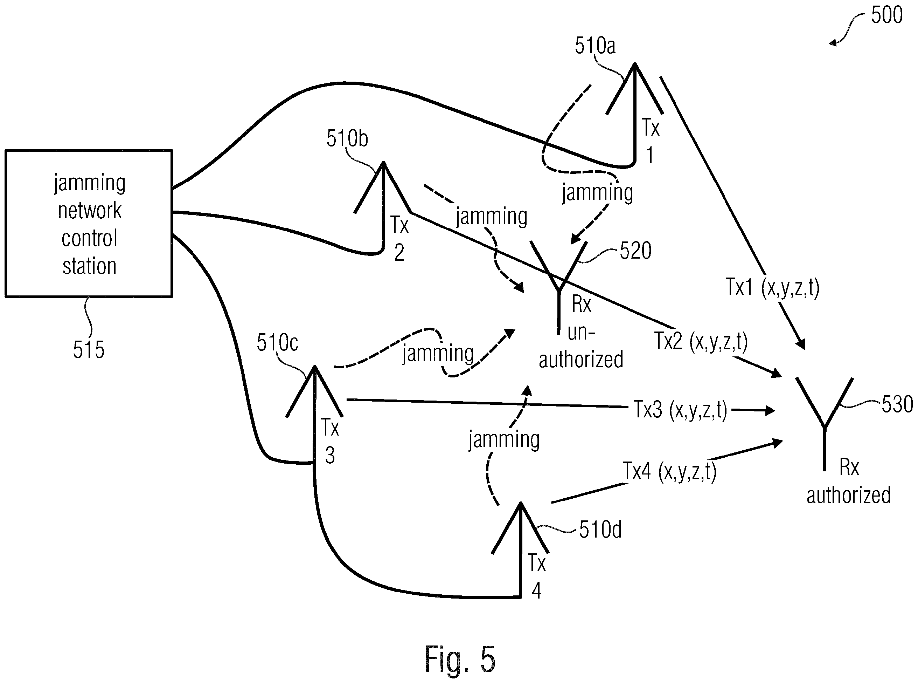

Fig. 5 shows a schematic of a system 500 comprising navigation system jammers (Tx1-4) 510a-d, for example navigation system jammers 300 or 400, which are controlled by a jamming network control station 515. The navigation system jammers 510a-c cooperatively jam an unauthorized receiver (Rx) 520 (which would normally - in an unjammed situation - be able to receive or evaluate a GNSS signal) by transmission of jamming signals. Furthermore, an authorized receiver 530, for example navigation receiver 100 or 200, is able to determine its position based on the jamming signals transmitted by the navigation system jammers 510a-d. The navigation system jammers 510a-d act as network-based jammers as they are controlled by the jamming network control station 515 and as a so-called pseudolite (pseudo satellite) system for the authorized receiver 530 by facilitating position determination on the basis of a substitute signal for a GNSS signal (the jamming signal). The transmitters 510a-d transmit jamming signals corresponding for example to signal 440'. The receivers 520 or 530, receive a signal comprising the jamming signals for example as input signal 105 or 205, wherein the unauthorized receiver 520 cannot make use of the signal for position determination. Moreover, the navigation system jammers 510a-d may, for example, transmit three dimensional (x,y,z) location information and time (t) information for the authorized receiver 530.

Moreover, figure 5 shows an example setup of 4 network-based GNSS jammers 510a-d (Tx 1 to 4) transmitting their time and position information (x, y, z, t) to an authorized user 530, which uses the information to navigate, and an un-authorized user 520 which is jammed by the process.

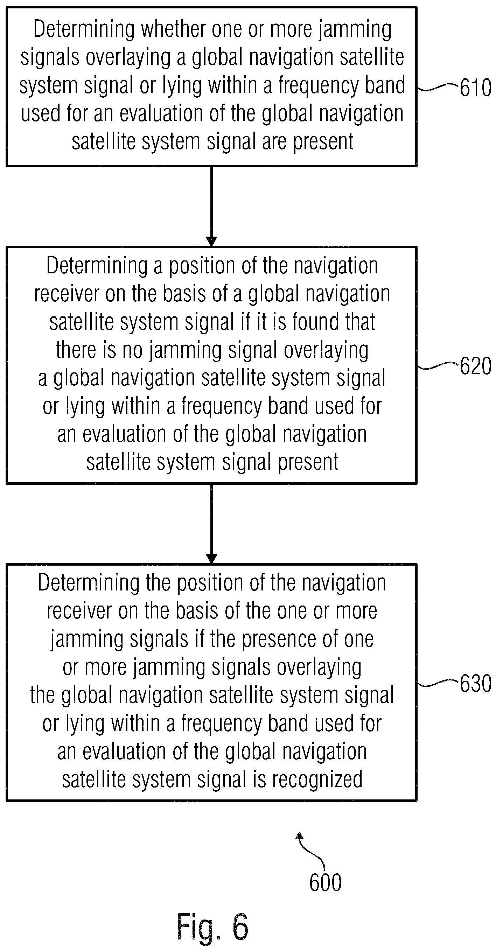

Fig. 6 shows a flow chart of a method 600 for determining a position using a navigation receiver. A first step 610, comprises determining whether one or more jamming signals overlaying a GNSS signal or lying within a frequency band used for an evaluation of the GNSS signal are present. In another step 620, a position of the navigation receiver is determined on the basis of a GNSS signal if it is found that there is no jamming signal overlaying a GNSS signal or lying within a frequency band used for an evaluation of the GNSS signal present. In a further step 630, the position of the navigation receiver is determined on the basis of the one or more jamming signals if the presence of one or more jamming signals overlaying the GNSS signal or lying within a frequency band used for and evaluation of the GNSS signal is recognized. The described method can be used for robust position determination for an unauthorized receiver for example navigation receivers 100, 200 or 530.

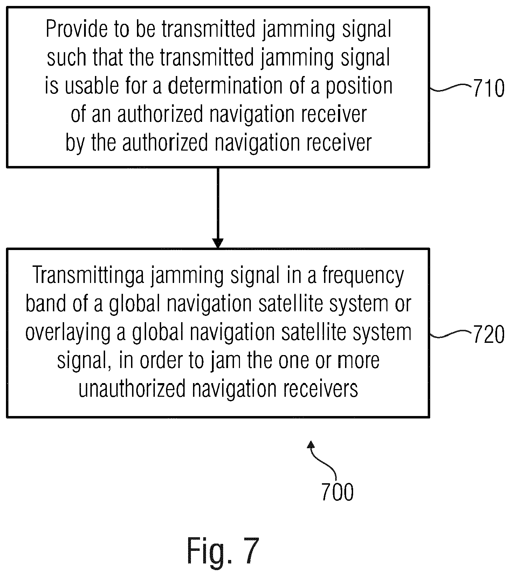

Fig. 7 shows a flow chart of a method 700 for jamming one or more unauthorized navigation receivers. A step 710 comprises providing a to be transmitted jamming signal, such that the transmitted signal is usable for a determination of a position of an authorized navigation receiver by the authorized navigation receiver. In another step 720, a jamming signal in a frequency band of a GNSS or overlaying a GNSS signal is transmitted, in order to jam the one or more unauthorized navigation receivers. The method 700 can for example be performed by navigation system jammers 300, 400 or 510a-d. With the described method a flexible jamming of unauthorized navigation receivers can be performed while authorized navigation receivers may still be able to determine their position based on the jamming signal.

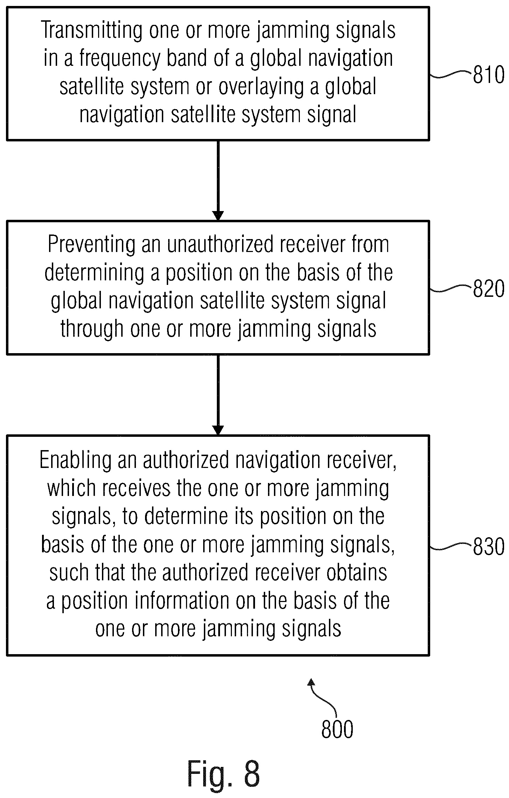

Fig 8 show a flow chart of a method 800 for restricting usage of a navigation system to authorized receivers. In a step 810, one or more jamming signals are transmitted in a frequency band of a GNSS or overlaying a GNSS signal. In a further step 820, unauthorized users are prevented from determining a position on the basis of the GNSS signal through one or more jamming signals. In a another step 830, an authorized navigation receiver, which receives the one or more jamming signals, is enabled to determine its position on the basis of the one or more jamming signals, such that the authorized receiver obtains a position information on the basis of the one or more jamming signals. The described method can be performed by system 500 comprising, for example unauthorized navigation receiver 520, authorized navigation receivers 100, 200 or 530 and navigation system jammers 300, 400 or 510a-d.

### Further aspects and conclusions

It has been found that the ability to jam unauthorized receivers, e.g. 520, while allowing authorized, e.g. 100, 200 or 530, ones to still obtain valid PVT information could be reached by using special, network-based GNSS jammers, described herein for example navigation system jammers 300, 400 or 510a-d.

These network-based GNSS jammers transmit signals on the GNSS bands to make the GNSS service unavailable for all users: both authorized and non-authorized GNSS receivers are facing a GNSS DoS attack. However, while the non-authorized receivers are facing a pure DoS attack, the authorized users may have specially designed receivers: They recognize this type of authorized GNSS DoS and may exploit their a priori knowledge of the network-based jamming system to use it as a pseudo satellite (pseudolite). The authorized receivers can now navigate using the jamming sources / pseudolites instead of GNSS, while the unauthorized receivers have no knowledge about the network-based GNSS jammers / pseudolites and therefore cannot decode their information, making a network-based GNSS jammer / pseudolite appear like any other GNSS jammer.

The setup of the network-based GNSS jammers / pseudolites, e.g. 300, 400 or 510a-d, can be on mobile units or permanently installed stations. However, the pseudolites may need to be synchronized and may transmit some identification with optional auxiliary data. Moreover, the network can be used to set the a priori position information of each jamming source and to control jamming power, modulation and other information.

The synchronization can be achieved by using a common reference clock or highly stable local jammer locks (or highly stable local jammer clocks) that can be steered by a synchronized network. The transmitted jamming waveforms shall be configurable and could be any believable interferer, including but not limited to pulsed, chirp, and matched spectrum interferences. Wherein the latter may, for example, describe a signal resembling a GNSS signal.

The pseudolite waveforms may include individual identification and time information, optionally with clock correction data. If the network-based jammers, e.g. 300, 400 or 510a-d, are stationary, the authorized receivers, e.g. 100, 200 or 530, can use the received identifications with the a priori knowledge of their position. For a mobile network of synchronized jammers, the waveforms transmitted may also include the individual position information.

It has been found that in contrast to stand alone GNSS jammers that provide a denial-of-service for both authorized and un-authorized GNSS receivers, a network-based jamming approach gives authorized receivers a fall-back solution to utilize the network-based jammers, e.g. 300, 400 or 510a-d, as a pseudolite system, e.g. 500.

It has furthermore been found that using strong network-based interference sources, standard unauthorized GNSS receivers can considerably be jammed preventing their successful PVT determination using GNSS. Even if the unauthorized receivers utilize interference mitigation methods like array processing. If the network based jamming system, for example the jammers 510a-d in system 500, is dense enough, an array with many antenna-elements would be needed to have very narrow reception beam pattern for high elevation GNSS satellites and deep nulls for each of the transmitted GNSS signal source. Even moderately powered GNSS matched spread spectrum interference waveforms might be enough to prevent authorized receivers form GNSS reception.

It has been found that authorized receivers, e.g. 100, 200 or 530, can profit from the relatively high pseudolite reception power for their PVT calculation without GNSS. Even if the possible attacker tries to jam GNSS from their side, the network-based jammer approach, e.g. as described in reference to system 500, can adapt the used jamming based waveforms to be most efficient and effective for jamming unauthorized receivers while providing a good PVT source for authorized receivers. For example, this adaptation can be reached by the waveform switcher 430 at the side of the transmitter and by waveform switcher 236 on the side of the receiver.

It has been found that the network of transmitters will typically jam only a limited area. Within this area the jamming to signal ratio will be sufficiently high, due to the difference in range of the transmitters to the receiver and the satellites to receiver, to overpower a non-authorised user, even if a high dynamic range receiver is used. Outside of the area, the jamming capability will be reduced, until ultimately no interference to GNSS is observed. This limitation of geographical area will allow spatially restricted DoS, within legislative restrictions.

The authorized receivers that should profit from network-jammer based solutions may need to be modified for this system to work (for example, when compared to conventional navigation receivers). Standard receivers may not work out-of-the-box, mainly due to the fact as detection of the network-based jammer is required (i.e. some cognitive signal processing ability) as well as improved dynamic range to handle the difference of signal strengths of each signal.

Depending on the used jamming waveforms and power levels, an extended dynamic reception range in the modified authorized receivers (for example in the navigation receivers 100, 200 or 530) may be necessary to avoid driving the authorized receivers into saturation.

Moreover, if the network-based jamming transmitter locations are dense and/or the authorized receivers are near one of the jamming transmitters, the so called "near-far-effect" may need to be taken into account. It may need to be prevented, that the local/near strong received signal power does not block the reception of the other signal sources far away and therefor much weaker in their reception power. In other words, it is desirable to prevent blocking of the reception of the other jammer signals due to a jamming signal received with high power from a closely located transmitter. Else, the possible position accuracy will suffer considerably.

It has been found that the use of a signal to both jam un-authorized users and to be used for PVT for authorized users is a unique application of the same signal. The intent of a (conventional) networked-jammer (then called "pseudolite") is traditionally to improve performance not to have a dual use.

Further aspects are the use of jammer as source for PVT, cooperative tracking, active jamming, network confirmation of PVT (terrestrial confirmation), cellular timing advance, usage of pseudolites for positioning, network of jammers, localization using communication signals, calculation of PVT or exploitation of the jammer.

Most conventional systems either:
- Detect jammers and locates them for the intent of removing the jammer (i.e. does not exploit the jammer for PVT), or
- Use a network of jammers to improve jamming performance over an area, whilst reducing detectability or location.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. A navigation receiver for determining a position,
wherein the navigation receiver is configured to determine a position on the basis of a global navigation satellite system signal,
wherein the navigation receiver is configured to recognize a presence of one or more jamming signals overlaying the global navigation satellite system signal or lying within a frequency band used for an evaluation of the global navigation satellite system signal; and
wherein the navigation receiver is configured to determine the position on the basis of the one or more jamming signals if the presence of one or more jamming signals overlaying the global navigation satellite system signal or lying within a frequency band used for an evaluation of the global navigation satellite system signal is recognized.

2. The navigation receiver according to claim 1, wherein the navigation receiver is configured to use an a-priori knowledge about positions of one or more transmitters transmitting one or more jamming signals to determine the position on the basis of the one or more jamming signals.

3. The navigation receiver according to claim 1 or claim 2, wherein the navigation receiver is configured to obtain an identification information on the basis of a jamming signal, and to obtain an information about a transmitter transmitting the jamming signal on the basis of the identification information.

4. The navigation receiver according to one of claims 1 to 3, wherein the navigation receiver is configured to evaluate a jamming signal, to extract from the jamming signal a position information describing a position of a transmitter transmitting the jamming signal.

5. The navigation receiver according to one of claims 1 to 4, wherein the navigation receiver is configured to distinguish a plurality of jamming signals overlaying the global navigation satellite system signal or lying within a frequency band used for an evaluation of the global navigation satellite system signal, and to determine the position on the basis of the one or more jamming signals if the presence of one or more jamming signals overlaying the global navigation satellite system signal or lying within a frequency band used for an evaluation of the global navigation satellite system signal is recognized.

6. The navigation receiver according to one of claims 1 to 5, wherein the navigation receiver is configured to evaluate a jamming signal, to extract from the jamming signal a time information and/or a clock correction information.

7. The navigation receiver according to one of claims 1 to 6, wherein the one or more jamming signals and the global navigation satellite signal overlap in frequency or cover identical frequency ranges.

8. The navigation receiver according to one of claims 1 to 7, wherein the navigation receiver is configured to use jamming signals having different types of waveforms or different types of spectral characteristics in order to determine the position on the basis of the one or more jamming signals.

9. The navigation receiver according to one of claims 1 to 8, wherein the navigation receiver is configured to use jamming signals having a global navigation satellite system signal like structure in order to determine the position on the basis of the one or more jamming signals.

10. The navigation receiver according to one of the claims 1 to 9, wherein the navigation receiver is configured to disable evaluation of global navigation satellite system signals if one or more jamming signals are detected and to evaluate the one or more jamming signals in order to determine the position on the basis of the one or more jamming signals in this case.

11. A navigation system jammer for jamming unauthorized navigation receivers,
wherein the navigation system jammer is configured to transmit a jamming signal in a frequency band of a global navigation satellite system or overlaying a global navigation satellite system signal,
wherein the navigation system jammer is configured to provide the transmitted jamming signal such that the transmitted jamming signal is usable for a determination of a position of an authorized navigation receiver by the authorized navigation receiver.

12. A navigation system jammer according to claim 11, wherein the jammer is configured to time-synchronize the jamming signal to be transmitted to jamming signals transmitted by other navigation system jammers.

13. A navigation system jammer according to claim 11 or claim 12, wherein the jammer is configured to be controlled by a control unit, wherein the control unit time-synchronizes the jammer to other jammers and/or controls the controlled jammers' emission power and/or jammers' waveform.

14. A navigation system jammer according to one of the claims 11 to 13, wherein the navigation system jammer is configured to include an identification information into the jamming signal.

15. A navigation system jammer according to one of the claims 11 to 14, wherein the navigation system jammer is mobile, and/or
wherein the navigation system jammer is configured to include into the jamming signal a position information describing a position from which the jamming signal is transmitted.

16. A navigation system jammer according to one of the claims 11 to 15, wherein the navigation system jammer is configured to include into the jamming signal a time information and/or a clock correction information.

17. A navigation system jammer according to one of the claims 11 to 16, wherein the navigation system jammer is configured to switch between jamming signals having different types of waveforms or different types of spectral characteristics.

18. A navigation system jammer according to one of the claims 11 to 17, wherein the navigation system jammer is configured to adapt a jamming signal waveform in dependence on distortion signals present in an environment of the navigation system jammer.

19. Restricted communication system comprising:
one or more navigation system jammers according to one of the claims 11 to 18, and
an authorized navigation receiver according to one of the claims 1 to 10,
wherein the one or more navigation system jammers are configured to transmit one or more jamming signals, wherein the one or more jamming signals are configured to hamper an unauthorized navigation receiver from determining its position using one or more global navigation satellite system signals, while enabling the authorized receiver to determine its position, and
wherein the authorized navigation receiver is configured to determine its position based on one or more global navigation satellite system signals if no jamming signal is detected and to determine its position based on the one or more jamming signals if a jamming signal is detected.

20. A method for determining a position using a navigation receiver, the method com prising:
determining whether one or more jamming signals overlaying a global navigation satellite system signal or lying within a frequency band used for an evaluation of the global navigation satellite system signal are present; and
determining a position of the navigation receiver on the basis of a global navigation satellite system signal if it is found that there is no jamming signal overlaying a global navigation satellite system signal or lying within a frequency band used for an evaluation of the global navigation satellite system signal present; and
determining the position of the navigation receiver on the basis of the one or more jamming signals if the presence of one or more jamming signals overlaying the global navigation satellite system signal or lying within a frequency band used for an evaluation of the global navigation satellite system signal is recognized.

21. A method for jamming one or more unauthorized navigation receivers,
wherein the method comprises transmitting a jamming signal in a frequency band of a global navigation satellite system or overlaying a global navigation satellite system signal, in order to jam the one or more unauthorized navigation receivers,
wherein the transmitted jamming signal is provided such that the transmitted jamming signal is usable for a determination of a position of an authorized navigation receiver by the authorized navigation receiver.

22. A method for restricting usage of a navigation system to authorized receivers, the method comprising:
transmitting one or more jamming signals in a frequency band of a global navigation satellite system or overlaying a global navigation satellite system signal,
wherein the one or more jamming signals prevents an unauthorized receiver from determining a position on the basis of the global navigation satellite system signal, wherein the one or more jamming signal enables an authorized navigation receiver, which receives the one or more jamming signals, to determine its position on the basis of the one or more jamming signals, such that the authorized receiver obtains a position information on the basis of the one or more jamming signals.

23. Computer program with a program code for performing one of the methods according to claims 20, 21 or 22, when the computer program runs on a computer or a microcontroller.

## Amended claims

### Amended claims in accordance with Rule 137(2) EPC.

1. A navigation receiver (100; 200; 530) for determining a position,
wherein the navigation receiver is configured to determine (120; 220) a position on the basis of a global navigation satellite system signal;
wherein the navigation receiver is configured to recognize (110; 210) a presence of one or more jamming signals overlaying the global navigation satellite system signal or lying within a frequency band used for an evaluation of the global navigation satellite system signal;
wherein the navigation receiver is configured to determine (130;230) the position on the basis of the one or more jamming signals if the presence of one or more jamming signals overlaying the global navigation satellite system signal or lying within a frequency band used for an evaluation of the global navigation satellite system signal is recognized; and
wherein the navigation receiver is configured to extract (232) an identification information, which is included in a jamming signal by a jammer, on the basis of a jamming signal, and to obtain an information about a transmitter transmitting the jamming signal on the basis of the identification information.

2. The navigation receiver according to claim 1, wherein the navigation receiver is configured to use an a-priori knowledge (237) about positions of one or more transmitters transmitting one or more jamming signals to determine the position on the basis of the one or more jamming signals.

3. The navigation receiver according to claim 1 or 2, wherein the navigation receiver is configured to evaluate (233) a jamming signal, to extract from the jamming signal a position information describing a position of a transmitter transmitting the jamming signal,
wherein the position information is included or encoded in the jamming signal.

4. The navigation receiver according to one of claims 1 to 3, wherein the navigation receiver is configured to distinguish a plurality of jamming signals overlaying the global navigation satellite system signal or lying within a frequency band used for an evaluation of the global navigation satellite system signal, and to determine the position on the basis of the one or more jamming signals if the presence of one or more jamming signals overlaying the global navigation satellite system signal or lying within a frequency band used for an evaluation of the global navigation satellite system signal is recognized.

5. The navigation receiver according to one of claims 1 to 4, wherein the navigation receiver is configured to evaluate a jamming signal, to extract from the jamming signal a time information and/or a clock correction information.

6. The navigation receiver according to one of claims 1 to 5, wherein the one or more jamming signals and the global navigation satellite signal overlap in frequency or cover identical frequency ranges.

7. The navigation receiver according to one of claims 1 to 6, wherein the navigation receiver is configured to use (236) jamming signals having different types of waveforms or different types of spectral characteristics in order to determine the position on the basis of the one or more jamming signals.

8. The navigation receiver according to one of claims 1 to 7, wherein the navigation receiver is configured to use jamming signals having a global navigation satellite system signal like structure in order to determine the position on the basis of the one or more jamming signals.

9. The navigation receiver according to one of the claims 1 to 8, wherein the navigation receiver is configured to disable (222) evaluation of global navigation satellite system signals if one or more jamming signals are detected and to evaluate the one or more jamming signals in order to determine the position on the basis of the one or more jamming signals in this case.

10. A navigation system jammer (300; 400; 510a, 510b, 510c, 510d) for jamming unauthorized navigation receivers,
wherein the navigation system jammer is configured to transmit (320; 440) a jamming signal in a frequency band of a global navigation satellite system or overlaying a global navigation satellite system signal;
wherein the navigation system jammer is configured to provide (310; 410) the transmitted jamming signal such that the transmitted jamming signal is usable for a determination of a position of an authorized navigation receiver by the authorized navigation receiver; and
wherein the navigation system jammer is configured to include an identification information (412) into the jamming signal.

11. A navigation system jammer according to claim 10, wherein the jammer is configured to time-synchronize (420) the jamming signal to be transmitted to jamming signals transmitted by other navigation system jammers.

12. A navigation system jammer according to claim 10 or claim 11, wherein the jammer is configured to be controlled by a control unit (515), wherein the control unit time-synchronizes the jammer to other jammers and/or controls the controlled jammers' emission power and/or jammers' waveform.

13. A navigation system jammer according to one of the claims 10 to 12, wherein the navigation system jammer is mobile, and/or
wherein the navigation system jammer is configured to include into the jamming signal a position information (414) describing a position from which the jamming signal is transmitted.

14. A navigation system jammer according to one of the claims 10 to 13, wherein the navigation system jammer is configured to include into the jamming signal a time information (418) and/or a clock correction information (416).

15. A navigation system jammer according to one of the claims 10 to 14, wherein the navigation system jammer is configured to switch (430) between jamming signals having different types of waveforms or different types of spectral characteristics.

16. A navigation system jammer according to one of the claims 10 to 15, wherein the navigation system jammer is configured to adapt a jamming signal waveform in dependence on distortion signals present in an environment of the navigation system jammer.

17. Restricted communication system (500) comprising:
one or more navigation system jammers (300; 400; 510a, 510b, 510c, 510d), wherein the one or more navigation system jammers are configured to transmit jamming signals in a frequency band of a global navigation satellite system or overlaying a global navigation satellite system signal;
wherein the one or more navigation system jammers are configured to provide transmitted jamming signals such that the transmitted jamming signals are usable for a determination of a position of an authorized navigation receiver by the authorized navigation receiver
, and
an authorized navigation (100; 200; 530) receiver, wherein the navigation receiver is configured to determine a position on the basis of a global navigation satellite system signal;
wherein the navigation receiver is configured to recognize a presence of one or more jamming signals overlaying the global navigation satellite system signal or lying within a frequency band used for an evaluation of the global navigation satellite system signal;
wherein the navigation receiver is configured to determine the position on the basis of the one or more jamming signals if the presence of one or more jamming signals overlaying the global navigation satellite system signal or lying within a frequency band used for an evaluation of the global navigation satellite system signal is recognized,
wherein the one or more navigation system jammers are configured to transmit one or more jamming signals, wherein the one or more jamming signals are configured to hamper an unauthorized navigation receiver (520) from determining its position using one or more global navigation satellite system signals, while enabling the authorized receiver to determine its position, and
wherein the authorized navigation receiver is configured to determine its position based on one or more global navigation satellite system signals if no jamming signal is detected and to determine its position based on the one or more jamming signals if a jamming signal is detected.

18. A method (600) for determining a position using a navigation receiver, the method comprising:
determining (610) whether one or more jamming signals overlaying a global navigation satellite system signal or lying within a frequency band used for an evaluation of the global navigation satellite system signal are present; and
determining (620) a position of the navigation receiver on the basis of a global navigation satellite system signal if it is found that there is no jamming signal overlaying a global navigation satellite system signal or lying within a frequency band used for an evaluation of the global navigation satellite system signal present;
determining (630) the position of the navigation receiver on the basis of the one or more jamming signals if the presence of one or more jamming signals overlaying the global navigation satellite system signal or lying within a frequency band used for an evaluation of the global navigation satellite system signal is recognized; and
obtaining an identification information, which is included in the jamming signal by the jammer, on the basis of a jamming signal, and to obtain an information about a transmitter transmitting the jamming signal on the basis of the identification information.

19. A method (700) for jamming one or more unauthorized navigation receivers,
wherein the method comprises transmitting (720) a jamming signal in a frequency band of a global navigation satellite system or overlaying a global navigation satellite system signal, in order to jam the one or more unauthorized navigation receivers,
wherein the transmitted jamming signal is provided (710) such that the transmitted jamming signal is usable for a determination of a position of an authorized navigation receiver by the authorized navigation receiver; and
including an identification information into the jamming signal.

20. A method (800) for restricting usage of a navigation system to authorized receivers, the method comprising:
transmitting (810) one or more jamming signals in a frequency band of a global navigation satellite system or overlaying a global navigation satellite system signal,
wherein the one or more jamming signals prevents (820) an unauthorized receiver from determining a position on the basis of the global navigation satellite system signal,
wherein the one or more jamming signal enables (830) an authorized navigation receiver, which receives the one or more jamming signals, to determine its position on the basis of the one or more jamming signals, such that the authorized receiver obtains a position information on the basis of the one or more jamming signals.

21. Computer program with a program code for performing one of the methods according to claims 18, 19 or 20, when the computer program runs on a computer or a microcontroller.

22. A navigation receiver (200; 530) for determining a position,
wherein the navigation receiver is configured to determine a position on the basis of a global navigation satellite system signal;
wherein the navigation receiver is configured to recognize a presence of one or more jamming signals overlaying the global navigation satellite system signal or lying within a frequency band used for an evaluation of the global navigation satellite system signal;
wherein the navigation receiver is configured to determine the position on the basis of the one or more jamming signals if the presence of one or more jamming signals overlaying the global navigation satellite system signal or lying within a frequency band used for an evaluation of the global navigation satellite system signal is recognized; and
wherein the navigation receiver is configured to evaluate a jamming signal, to extract from the jamming signal a position information describing a position of a transmitter transmitting the jamming signal,
wherein the position information is included or encoded in the jamming signal.

23. A navigation system jammer (400; 510a, 510b, 510c, 510d) for jamming unauthorized navigation receivers,
wherein the navigation system jammer is configured to transmit a jamming signal in a frequency band of a global navigation satellite system or overlaying a global navigation satellite system signal;
wherein the navigation system jammer is configured to provide the transmitted jamming signal such that the transmitted jamming signal is usable for a determination of a position of an authorized navigation receiver by the authorized navigation receiver; and
wherein the navigation system jammer is configured to include into the jamming signal a position information describing a position from which the jamming signal is transmitted.

24. A method for determining a position using a navigation receiver, the method comprising:
determining whether one or more jamming signals overlaying a global navigation satellite system signal or lying within a frequency band used for an evaluation of the global navigation satellite system signal are present;
determining a position of the navigation receiver on the basis of a global navigation satellite system signal if it is found that there is no jamming signal overlaying a global navigation satellite system signal or lying within a frequency band used for an evaluation of the global navigation satellite system signal present;
determining the position of the navigation receiver on the basis of the one or more jamming signals if the presence of one or more jamming signals overlaying the global navigation satellite system signal or lying within a frequency band used for an evaluation of the global navigation satellite system signal is recognized; and
evaluating a jamming signal, to extract from the jamming signal a position information describing a position of a transmitter transmitting the jamming signal,
wherein the position information is included or encoded in the jamming signal.

25. A method for jamming one or more unauthorized navigation receivers,
wherein the method comprises transmitting a jamming signal in a frequency band of a global navigation satellite system or overlaying a global navigation satellite system signal, in order to jam the one or more unauthorized navigation receivers;
wherein the transmitted jamming signal is provided such that the transmitted jamming signal is usable for a determination of a position of an authorized navigation receiver by the authorized navigation receiver; and
including a position information into the jamming signal describing a position from which the jamming signal is transmitted.

26. Computer program with a program code for performing one of the methods according to claims 24 or 25, when the computer program runs on a computer or a microcontroller.
